# EUROPEAN PATENT SPECIFICATION

(11) **EP 3 414 451 B1**
(45) Date of publication and mention of the grant of the patent: **08.04.2020**
(21) Application number: 17704746.1
(22) Date of filing: 10.02.2017
(51) Int. Cl.: F03B 13/18, F03B 13/20

(54) **DEVICE FOR CONVERTING WAVE ENERGY INTO ELECTRICAL ENERGY**
WELLENKRAFTWERK
CENTRALE HOULOMOTRICE

(30) Priority: 11.02.2016 ES 201630164
(43) Date of publication of application: 19.12.2018
(73) Proprietor: Smalle Technologies, S.L., 08013 Barcelona (ES)
(72) Inventor: CARBALLO ESCRIBANO, Rubén, 17300 Blanes (ES); ARANDA RASCÓN, Miguel J., 08025 Barcelona (ES); JORDÀ CAMPOS, Carlos, 08914 Badalona (ES); GARCÍA ÁLVAREZ, Javier, 08032 Barcelona (ES); MARTÍN ROMÁN, Héctor, 08013 Barcelona (ES); MARTÍNEZ PÉREZ, Alejandro, 08923 Santa Coloma de Gramenet (ES); DÖRING, Falko, 08001 Barcelona (ES)
(74) Representative: ZBM Patents - Zea, Barlocci & Markvardsen
(86) International application number: PCT/EP2017/053002
(87) International publication number: WO 2017/137561

(56) References cited:
- WO-A1-2014/077493
- CN-Y- 201 381 930
- JP-A- S5 627 075
- JP-A- 2013 204 606
- RO-B- 114 920
- US-A1- 2010 283 249
- US-A1- 2011 185 719
- US-A1- 2015 337 795

## Description

The present disclosure relates to a device for converting wave energy into electrical energy, and also to a floating apparatus provided with such a device.

### BACKGROUND ART

Systems for converting wave energy into electrical energy are known, see e.g. US 2011/185719, US 2010/283249 and US 2015/337795. For example, JPH07293420 discloses a floating body for recovering, in the form of electrical energy, the kinetic energy stored in the waves. One end of the floating body remains anchored while the other end is freely movable, ascending or descending upon the waves. There is, within the floating body, a moving mass which follows a reciprocating motion on a track as a consequence of the upward or downward motion of the floating body. Said reciprocating motion is converted into rotation by the effect of a chain and pulley mechanism, and said rotational motion is transmitted to the rotor of an electric generator.

However, when the surge reaches a low height the moving mass moves at low speed and, therefore, the rotor speed is also low, whereby the electricity generated is of low voltage and low power, ill suited to be used in practical applications, such as powering luminaires or charging batteries. In addition, the fact that the moving mass has a reciprocating motion implies that the velocity changes sign and passes through value zero, which implies a generator's dead center (in fact a range around this center, which is the downtime of the generator) in which the production of electrical energy is zero. Moreover, in the periods of time before and after the passage through the zero speed, which respectively correspond to braking and booting the generator, the latter undergoes notable variations of speed that separate it from its optimal rotation regime, so that, in these time periods of very variable speed, the energy efficiency of the generator is significantly reduced (i.e. the generator sees its rate of conversion from mechanical into electrical energy substantially reduced).

### SUMMARY

An object of the present disclosure is to provide a device for converting wave energy into electrical energy which overcomes at least some of the mentioned drawbacks.

According to the invention a device of this kind comprises a sliding mass, a guide for the sliding mass, an electric generator provided with a rotor, a shaft integral with the rotor, a first mechanism connecting the sliding mass to the rotor shaft that can convert the motion of the sliding mass on the guide into a rotational motion of the rotor shaft, and a second mechanism interposed between the first mechanism and the rotor shaft to provide the rotor with an one-way rotational motion (that is, a rotation with a single and fixed sense of rotation, be it either clockwise or counterclockwise), regardless of the direction of the sliding mass' motion.

Thanks to the second mechanism, although there may be occasions when the rotor speed decreases, the downtime of the generator is reduced and the output power thereof is increased, which improves the energy efficiency of the device. The device can be designed so that the inertia of the assembly (rotor, shaft, pulleys, gears) is such as to maintain a minimum (but adequate) rotation of the rotor in periods when the speed of the sliding mass is relatively low.

In some examples, the device may comprise a flywheel connected to the rotor shaft in order to keep the rotor rotating at a near-optimal speed for a longer time, which will result in a further improvement in the energy efficiency of the generator.

On the other hand, if the sliding mass follows a recipocating motion, there may be, on the ends of the guide, one or more elastic elements which collect part of the braking and acceleration energy involved in the reciprocation (motion reversal).

It has already been mentioned that the production of the generator increases if its rate of conversion of mechanical into electrical energy is increased (i.e., if it operates in a more efficient regime), but also increases if the kinetic energy of the assembly (mass, flywheel, rotor, pulleys, gears, etc) is better utilized, and in fact the flywheel can contribute significantly to this improvement, as it accumulates kinetic energy that would otherwise be dissipated in the collision of the sliding mass with the stops of the guide (in the case of the guide being a segment -not necessarily straight- and the motion of the sliding mass being a reciprocating one), although there may also be the above-mentioned elastic elements. In fact, these elastic elements return to the sliding mass a part of the energy dissipated in the collisions, whereas the flywheel delivers part of its accumulated energy directly to the rotor of the generator.

It should be noted, however, that not always a higher moment of inertia implies an improvement in the energy efficiency of the device. Whether or not there is improvement depends on several factors, such as the specific value of the moment of inertia of the flywheel, the damping coefficient of the generator, the length of the guide and its orientation with respect to the waves, and the period of the waves, among others. It may even happen that the optimum moment of inertia is lower than that of the assembly (rotor, shaft, gears).

The flywheel can be variable in order to better adapt to the damping coefficient of the generator employed. In this regard, in some examples the flywheel may comprise a mainspring, for example a spiral spring, to provide the flywheel with a variable moment of inertia, whereby at low speeds the moment of inertia of the flywheel is lower and offers less resistance to the initial movement of the sliding mass, so that by virtue of the flywheel having the mainspring the device would be more sensitive to the surge (i.e. to the wave action) than by no having it (as it is the case with a conventional -non-variable- flywheel). Alternatively or additionally, the device may comprise a mainspring not contained in the flywheel.

In some examples, the flywheel may be located in substantially the same position as the sliding mass, in order to increase the total moving mass, whereby the energy density of the device would be higher.

The guide may follow various geometric shapes, for example a circular shape or, in general, a closed curve. A circular guide may show greater sensitivity to certain surges or waves, such as those formed by various components with different directions of propagation. In addition, as a closed guide would have no limit switch, the sliding mass could be moving a longer time, whereby the device would actually be generating electrical energy for longer.

In the case of a circular guide, the rotor may be coaxial with the guide, that is, the rotor may be located in the center of the circle, or, what is the same, on the rotation axis of the sliding mass in its path along the guide.

Alternatively, the guide may take the form of a straight segment, in which case the flywheel may be positioned on the rotor axis.

In some examples the straight guide may be mounted on a rotating platform with rotation freedom, thus allowing the sliding mass to be oriented in the approximate direction of the waves in order to take better advantage of the thrust thereof. The maximum sensitivity to the surge can be obtained with a straight guide oriented perpendicularly to the incident wave front.

In order to prevent the rotating platform from having very wide angular oscillations, a lot of which would deviate from the direction of the waves, the device may comprise an angular damper to damp the rotation of the platform. Said damper may be of the fluid-dynamic type, although it could also be of other types, such as magnetic.

In some examples, the first mechanism may comprise two pulleys and a closed belt or chain extending between said pulleys, so that one of the pulleys (or chainrings, in case of chains) is coupled to the rotor shaft and the belt or chain is fixed to the sliding mass. The first mechanism may also comprise a gear train arranged between the rotor shaft and the pulley coupled thereto, in order to increase the rotor speed, since under conditions of weak surge the mass speed could only produce, by itself, a relatively low rotor speed, resulting in poor generation efficiency. The gear train can raise the rotor speed to a level that results in higher voltage and generation power, thus widening the practical applications of the generator.

In some examples, the second mechanism may be analogous to said first mechanism, so that the corresponding pulleys of each mechanism are integral with each other and the sliding mass is connected to the upper segment of one of the belts or chains and to the lower segment of the other belt or chain, the second mechanism comprising two inverted ratchets, one of which is arranged between a pulley belonging to the first mechanism and the rotor shaft, and the other ratchet being arranged between the corresponding pulley of the second mechanism and the rotor shaft, in order to drive the generator rotor in an one-way rotation.

According to the invention the second mechanism comprises a mechanical rectifier provided with a first toothed wheel having a first free pinion, a second toothed wheel which is connected to the first one but whose sense of rotation is opposite to that of the first one, and which has a second free pinion with a sense of engagement (to the wheel incorporating it) that is opposite to that of the first free pinion, and a third toothed wheel which is engaged to the two free pinions and is connected to the rotor of the generator, while the first or second toothed wheel is connected to the first mechanism (i.e. to the motion of the sliding mass), in order to drive the generator rotor in an one-way rotation.

A floating apparatus, for example a boat or a buoy, may comprise a device according to the above explanations. Said device may be intended to power electrical components of the floating apparatus, or a battery to power them, and may be scaled to generate electrical energy by various orders of magnitude.

Other objects, advantages and features in examples or embodiments of the invention will become apparent to the person skilled in the art from the following description, or may be learned by the practice of the invention.

### BRIEF DESCRIPTION OF THE DRAWINGS

Particular embodiments of the present disclosure will now be described by way of nonlimiting examples, with reference to the accompanying drawings, in which:
figure 1 is a schematic elevation view of a mechanism that converts rectilinear motion into rotational motion;
figure 2 is an elevation view of a device having a straight guide;
figure 3 is a perspective view of the device shown in figure 2;
figure 4 is a perspective view of a device having a circular guide;
figure 5 is a schematic view of a two-chain mechanism;
figure 6 is a perspective view of a two-chain mechanism;
figure 7 is a schematic view (in two situations) of a mechanical rectifier; and
figure 8 is a plant view (in two situations) of a mechanical rectifier.

### DETAILED DESCRIPTION

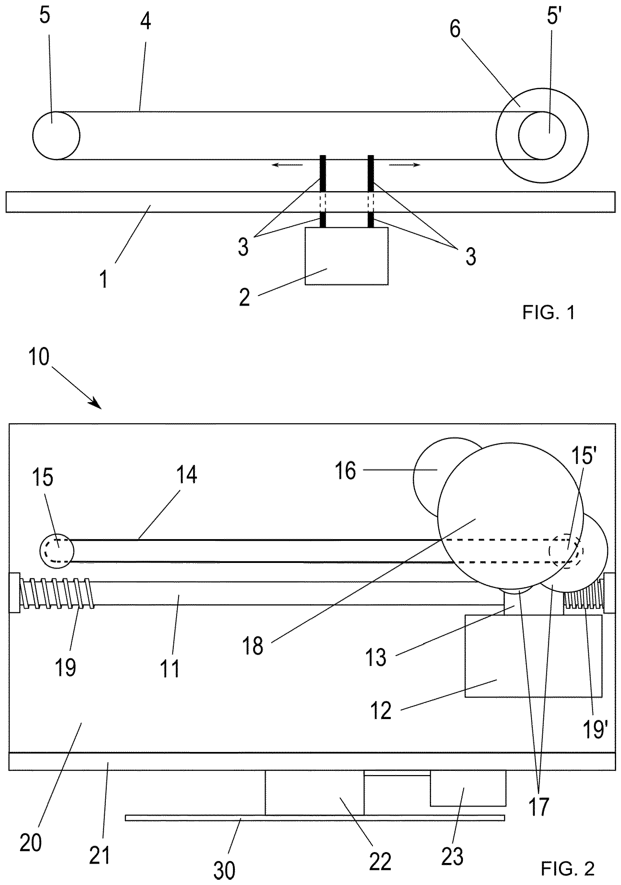

With reference to figure 1, a mass 2 is integral with a closed belt (or chain) 4 which is connected to respective pulleys (or chainrings, in the case of a chain) 5 and 5'. The mass 2 can slide on a straight guide 1 by means of connectors 3 which also connect the mass 2 to the belt 4. The pulley 5' is integral with the rotor (not shown) of an electric generator 6. Throughout this disclosure the term 'belt' can also be interpreted as 'chain' (and vice versa), and the term 'pulley' as 'chainring' (for a chain), and vice versa.

The rectilinear motion of the mass 2 on the guide 1 pulls the belt 4 along, which in turn drives the pulleys 5 and 5' in rotation, thus causing the rotor of the generator 6 to rotate, which consequently produces electricity.

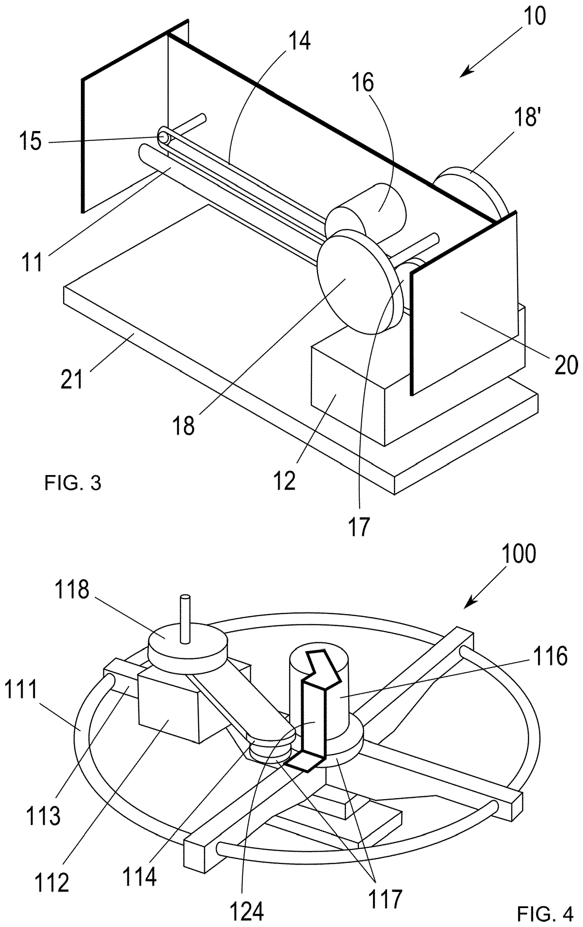

With reference to figures 2 and 3, a device 10 for converting wave energy into electrical energy comprises a straight guide 11, a mass 12 that slides on the guide 11 by means of a linear ball bearing 13 and is integral with a closed belt 14 that extends parallelly to the guide 11 between two pulleys, one of which (reference 15') is mechanically connected to the rotor (not shown) of an electric generator 16, while the other pulley (reference 15) is arranged in the other end of the belt 14. The device also comprises a gear train (or transmission) 17 connecting the pulley 15' the generator rotor, and a flywheel 18 also mechanically connected to the generator rotor. A second flywheel 18' is shown in figure 3.

In sum, the device 10 comprises a mechanism similar to that of figure 1 for converting the rectilinear motion of the mass 11 into a rotational motion of the rotor of the generator 16, although it presents the important difference of the flywheel 18 (and 18', when present).

The flywheel 18 (or 18') provides kinetic energy, in the form of rotational motion, to the rotor shaft when the latter starts decreasing its speed because of a slowdown of the mass 12.

Figure 2 shows springs 19 and 19' arranged at and on the ends of the guide 11, whose function is to dampen the impacts of the sliding mass 12 against said ends and to return a part of the energy dissipated in these impacts as a momentum acting in the opposite direction. The mass 12 itself may also incorporate similar springs.

The above-described elements are mounted on a frame 20 which fastens and secures the assembly.

The device 10 can be placed in a floating body (not shown), through a plate 30 (figure 2) integral thereto, in which the wave action causes successive and varied inclinations of the guide 11, which causes the sliding of the mass 12 on the guide and, consequently, the rotation of the rotor of the generator 16.

The frame 20 is mounted on a platform 21 which is rotatable with respect to the plate 30. As seen in figure 2, the platform 21 can rotate around a shaft 22, so that the device 10 has freedom of rotation on the plate 30, more precisely in the horizontal plane parallel to the plate 30, in the floating body in which it is installed. This configuration allows the platform 21, and hence the device 10, to be oriented in the direction of the dominant wave, that is, perpendicularly to the incident wave front, in order to maximize the wave energy.

The rotation of the platform 21 is dampened by an angular damper 23 (figure 2) in order to prevent such rotation from accelerating too much and averting the platform from the optimal or almost optimal orientation. The angular damper 23 may be of the fluid-dynamic type or of the magnetic type.

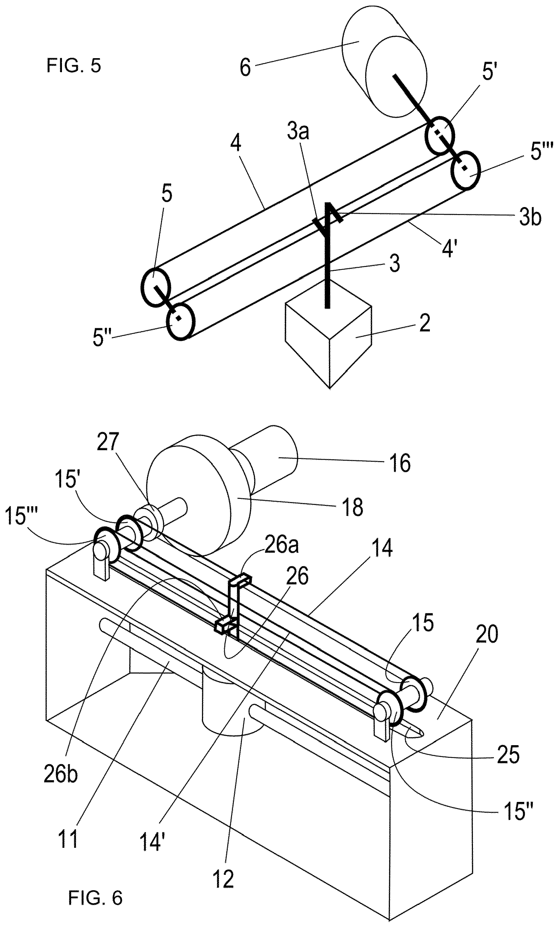

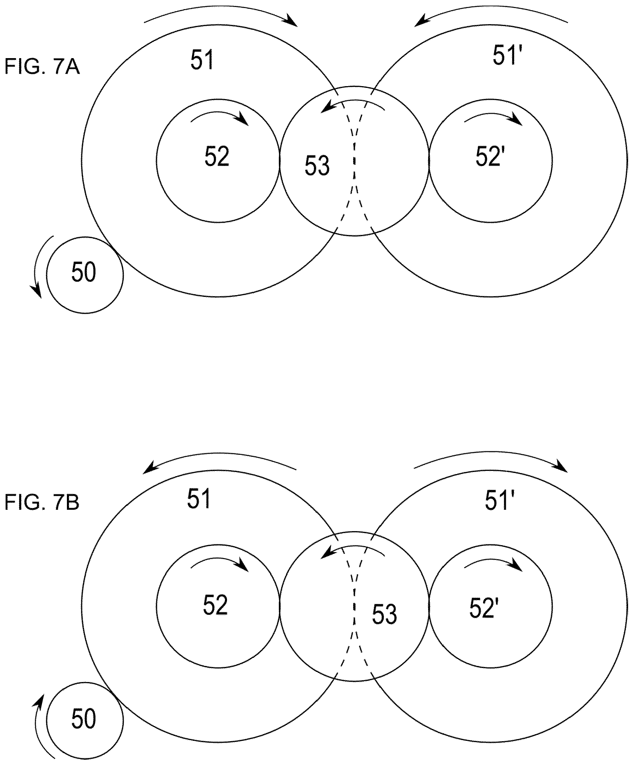

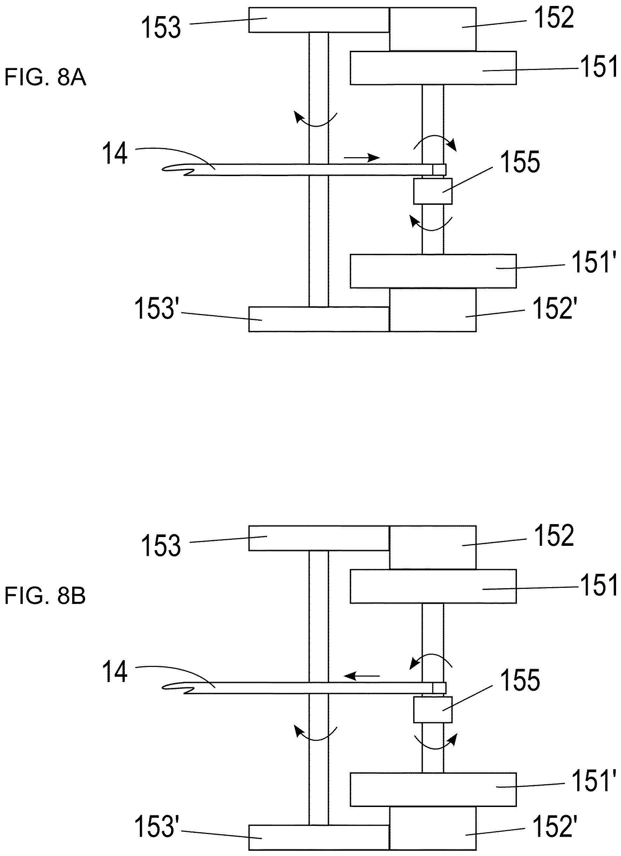

With a two-chain mechanism like that shown in figures 5 and 6, the rotor of the generator (6 or 16) must follow a single sense of rotation (or, in other words, an one-way rotation), whether the mass (2 or 12) moves in one direction or in the opposite direction. This can also be achieved with the mechanical rectifier of figures 7 and 8. A mechanism of this kind (to provide the rotor with an one-way rotation) causes the rotor speed to always be greater than or equal to the speed the rotor would have (by virtue of the motion of the sliding mass) if there were no such mechanism. More specifically, there is no such speed difference when the sliding mass is being accelerated or kept at a constant speed, but it might occur when the sliding mass is decelerating (whether or not it occurs depends, in this case, of the damping provided by the generator and the moment of inertia of the assembly -rotor, rotor shaft, gear train, flywheel, pulleys, etc.).

Figure 5 shows a first chain 4 between two pulleys 5 and 5', and a second chain between two pulleys 5" and 5''' The pulleys 5' and 5''' are connected to the rotor of the generator 6. The sliding mass 2 is integral with the chains 4 and 4', to which it is connected by a connector 3. The connector 3 has two legs, 3a and 3b; the leg 3a is attached to the lower segment of the chain 4 and the leg 3b is attached to the upper segment of the chain 4'. With this configuration, the rotation of the pulleys 5 and 5' is opposite to that of the pulleys 5" and 5'''. By means of inverted ratchets (not shown), it is possible for just one of the pulleys 5' and 5''' to transmit torque to the rotor of the generator at any given moment, and for said transmission to have the same (single) sense of rotation in both cases.

The mechanism of figure 6 is similar to that of figure 5 but is shown in more detail. Said mechanism comprises a first chain 14 between two pulleys 15 and 15', a second chain 14' between two pulleys 15" and 15''', and the mass 12 that can slide on the guide 11, which is installed in the frame 20. The mass 12 is attached to the upper segment of the chain 14 by means of a leg 26a, and is also attached to the lower segment of the chain 14' by means of a leg 26b. The legs 26a and 26b belong to a connector 26 that passes through a slot 25 made in the frame 20 above the mass 12. A transmission 27 comprises two inverted ratchets (not shown) that are analogous to those described in the previous paragraph. The flywheel 18 is arranged between the transmission 27 and the rotor of the generator 16.

Figures 7A and 7B schematically show a mechanical rectifier, which is the same in both figures but shown in different situations. A first toothed wheel 51 has a first free pinion 52, and a second toothed wheel 51' has a second free pinion 52'. The wheels 51 and 51' are engaged, but the senses of engagement of the first free pinion 52 and the second free pinion 52' with their respective wheels (51 and 51', respectively) are opposite. A third toothed wheel 53 is engaged to the two free pinions, 52 and 52'. The torque to be transmitted comes from an input wheel 50, which is engaged to the first toothed wheel 51.

When the input wheel 50 is rotated counterclockwise (fig. 7A), the first wheel 51 rotates clockwise and the first pinion 52 also, since this is its sense of engagement, and engages with the third wheel 53, which then rotates counterclockwise and drives the second pinion 52' clockwise, which is the sense opposite of its sense of engagement, whereby the second pinion 52' rotates freely and is not an obstacle for the second wheel 51' to rotate counterclockwise in accordance with its sense of engagement with the first wheel 51.

When the input wheel 50 rotates clockwise (fig. 7B), the first wheel 51 rotates counterclockwise and the second wheel 51' rotates clockwise. The second pinion 52' also rotates clockwise and drives the third wheel 53 counterclockwise. Thus, the third wheel always rotates counterclockwise and can be connected to the generator rotor.

Figures 8A and 8B show a similar configuration but with different geometry and as seen from above. A first toothed wheel 151 incorporates a first free pinion 152, and a second toothed wheel 151' incorporates a second free pinion 152'. The engaging senses of the first free pinion 152 and the second free pinion 152' with their respective wheels (151 and 151', respectively) are opposite. A gear 155 (i.e., an assembly of at least two engaged gears) ensures that the sense of rotation of the wheel 151' is opposite to that of the wheel 151. The gear 155 may assume any arrangement suitable for the wheels 151 and 151' to rotate in opposite senses. The wheel 53 of figure 7 is herein divided into two integral wheels 153 and 153', engaged to the pinions 152 and 152', respectively.

The belt 14 represents the inlet (analogous to reference 50 in Figure 8) to the mechanism. When the sense of the various movements is the one indicated by the arrows in figure 8A, the wheel 153 is driven by the pinion 152 and the pinion 152' rotates idly driven by the wheel 153'. When the direction of the various movements is the one indicated by the arrows in figure 8B, the wheel 153' is driven by the pinion 152' and the pinion 152 rotates idly driven by the wheel 153. Accordingly, the assembly of wheels 153 And 153' always rotates in the same sense and can be connected to the generator rotor.

Referring now to figure 4, in another embodiment a device 100 comprises a circular guide 111, a mass 112 sliding on the guide 111 by means of connectors 113, an electric generator 116 provided with a rotor (not shown), a shaft (not shown) integral with the rotor and a flywheel 118 connected to said rotor shaft. The mass 112 is integral with a closed belt 114 which is connected to two pulleys (not shown). A transmission 117 is arranged between one of the pulleys and the generator rotor; the transmission 117 may include a multiplier mechanism and/or an one way mechanism for the generator rotor. The flywheel 118 is located at the same position as the sliding mass 112, in order to increase the total weight of the sliding mass. The generator 116 is located at the center of the circle 111 and is attached to the assembly by a reinforcement 124.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. Device (10) for converting wave energy into electrical energy, comprising:
- a sliding mass (2; 12; 112);
- a guide (1; 11; 111) for the sliding mass;
- an electric generator (6; 16) provided with a rotor;
- a shaft integral with the rotor;
- a first mechanism that connects the sliding mass to the rotor shaft and can convert the motion of the sliding mass on the guide into a rotational motion of the rotor shaft;
said device further comprising a second mechanism interposed between the first mechanism and the rotor shaft to provide the rotor with an one-way rotational motion, regardless of the direction of the sliding mass' motion, **characterized in that** the second mechanism further comprises:
- a first toothed wheel (51; 151) having a first free pinion (52; 152) engaged thereto with a first sense of engagement;
- a second toothed wheel (51'; 151') having a second free pinion (52'; 152') engaged thereto with a second sense of engagement that is opposite to the first sense of engagement, the second toothed wheel being connected to the first toothed wheel so that the two toothed wheels have opposite rotation senses;
- a third toothed wheel (53; 153) which is engaged to the two free pinions and is connected to the rotor shaft, while the first or second toothed wheel is connected to the first mechanism.

2. Device according to claim 1, comprising a flywheel (18, 18'; 118) connected to the rotor shaft.

3. Device according to claim 1 or 2, comprising a mainspring connected to the rotor shaft.

4. Device according to claim 2, wherein the flywheel (18, 18'; 118) comprises a mainspring.

5. Device according to any of claims 2 to 4, wherein the flywheel (118) is located on the sliding mass (2; 12; 112).

6. Device according to any of the preceding claims, wherein the guide (1; 11; 111) has a circular shape.

7. Device according to claim 5 or 6, wherein the rotor is coaxial with the guide (1; 11; 111).

8. Device according to any of claims 2 to 4, wherein the guide (1; 11; 111) is a straight segment and the flywheel (18, 18') is positioned on the rotor axis.

9. Device according to claim 8, wherein the guide (1; 11) is mounted on a rotating platform (21).

10. Device according to claim 9, comprising an angular damper (23) for damping the rotation of the platform (21).

11. Device according to claim 10, wherein the damper (23) is of the fluid-dynamic or of the magnetic type.

12. Device according to any of the preceding claims, wherein the first mechanism comprises two pulleys (5, 5'; 15, 15') and a closed belt or chain (4; 14) extending between said pulleys, so that one of the pulleys (5'; 15') is coupled to the rotor shaft and the belt or chain is fixed to the sliding mass (2; 12), the first mechanism also comprising a gear train (17; 117) arranged between the rotor shaft and the pulley coupled thereto, in order to increase the rotor speed.

13. Device according to claim 12, wherein the second mechanism comprises two pulleys (15", 15'''), each of them being integral with one respective pulley (15, 15') of the first mechanism, and a closed belt or chain (14') extending between said pulleys, so that one of these pulleys (15''') is coupled to the rotor shaft and this belt or chain is fixed to the sliding mass (12).

14. Device according to claim 13, wherein the sliding mass (12) is connected to the upper segment of one of the belts or chains (14) and to the lower segment of the other belt or chain (14'), the device further comprising two inverted ratchets (27), one of which is arranged between a pulley (15') belonging to the first mechanism and the rotor shaft, and the other ratchet being arranged between the corresponding pulley (15''') of the second mechanism and the rotor shaft.

15. Floating apparatus comprising a device (10) according to any one of claims 1 to 14.

## Patentansprüche

1. Vorrichtung (10) zur Umwandlung von Wellenenergie in elektrische Energie, umfassend:
- eine Gleitmasse (2; 12; 112);
- eine Führung (1; 11; 111) für die Gleitmasse;
- einen elektrischen Generator (6; 16), der mit einem Rotor versehen ist;
- eine einstückig mit dem Rotor gebaute Welle;
- einen ersten Mechanismus, der die Gleitmasse mit der Rotorwelle verbindet und die Bewegung der Gleitmasse auf der Führung in eine Drehbewegung der Rotorwelle umwandeln kann;
wobei die Vorrichtung weiterhin einen zweiten Mechanismus umfasst, der zwischen dem ersten Mechanismus und der Rotorwelle zwischengeschaltet ist, um dem Rotor eine Einwegdrehbewegung unabhängig von der Richtung der Bewegung der Gleitmasse zu verleihen, **dadurch gekennzeichnet, dass** der zweite Mechanismus weiterhin folgendes umfasst:
- ein erstes Zahnrad (51; 151), das ein im Eingriff mit diesem stehendes erstes freies Ritzel (52; 152) hat, das eine erste Eingriffsrichtung hat;
- ein zweites Zahnrad (51'; 151'), das ein im Eingriff mit diesem stehendes zweites freies Ritzel (52'; 152') hat, das eine zweite Eingriffsrichtung hat, die der ersten Eingriffsrichtung entgegengesetzt ist, wobei das zweite Zahnrad mit dem ersten Zahnrad verbunden ist, so dass die zwei Zahnräder entgegengesetzte Drehrichtungen haben;
- ein drittes Zahnrad (53; 153), das im Eingriff mit den zwei freien Ritzeln steht und das mit der Rotorwelle verbunden ist, während das erste oder zweite Zahnrad mit dem ersten Mechanismus verbunden ist.

2. Vorrichtung nach Anspruch 1, umfassend ein mit der Rotorwelle verbundenes Schwungrad (18, 18'; 118).

3. Vorrichtung nach Anspruch 1 oder 2, umfassend eine mit der Rotorwelle verbundene Triebfeder.

4. Vorrichtung nach Anspruch 2, wobei das Schwungrad (18, 18'; 118) eine Triebfeder umfasst.

5. Vorrichtung nach einem der Ansprüche 2 bis 4, wobei das Schwungrad (118) auf der Gleitmasse (2; 12; 112) angeordnet ist.

6. Vorrichtung nach einem der vorhergehenden Ansprüche, wobei die Führung (1; 11; 111) kreisförmig ist.

7. Vorrichtung nach Anspruch 5 oder 6, wobei der Rotor koaxial mit der Führung (1; 11; 111) ist.

8. Vorrichtung nach einem der Ansprüche 2 bis 4, wobei die Führung (1; 11; 111) ein gerader Abschnitt ist und das Schwungrad (18, 18') auf der Rotorachse angeordnet ist.

9. Vorrichtung nach Anspruch 8, wobei die Führung (1; 11) auf einer rotierenden Plattform (21) montiert ist.

10. Vorrichtung nach Anspruch 9, umfassend einen Winkeldämpfer (23) zur Dämpfung der Drehung der Plattform (21).

11. Vorrichtung nach Anspruch 10, wobei der Dämpfer (23) der fluiddynamischen oder der magnetischen Art ist.

12. Vorrichtung nach einem der vorhergehenden Ansprüche, wobei der erste Mechanismus zwei Rollen (5, 5'; 15, 15') und einen geschlossenen Gurt oder eine geschlossene Kette (4; 14) umfasst, der bzw. die sich zwischen den Rollen erstreckt, so dass eine von den Rollen (5'; 15') an die Rotorwelle gekoppelt ist und der Gurt oder die Kette an der Gleitmasse (2; 12) befestigt ist, wobei der erste Mechanismus auch einen Getriebezug (17; 117) umfasst, der zwischen der Rotorwelle und der daran gekoppelten Rolle angeordnet ist, um die Rotordrehzahl zu erhöhen.

13. Vorrichtung nach Anspruch 12, wobei der zweite Mechanismus zwei Rollen (15", 15''') umfasst, wobei jeder von diesen einstückig mit einer jeweiligen Rolle (15, 15') des ersten Mechanismus ist, und einen geschlossenen Gurt oder eine geschlossene Kette (14') umfasst, der bzw. die sich zwischen den Rollen erstreckt, so dass eine von diesen Rollen (15"') an die Rotorwelle gekoppelt ist und dieser Gurt oder diese Kette an der Gleitmasse (12) befestigt ist.

14. Vorrichtung nach Anspruch 13, wobei die Gleitmasse (12) mit dem oberen Abschnitt von einem von den Gurten oder Ketten (14) und mit dem unteren Abschnitt des anderen Gurts oder Kette (14') verbunden ist, wobei die Vorrichtung weiterhin zwei Umkehrsperrklinken (27) umfasst, wobei eine von diesen zwischen einer Rolle (15'), die ein Teil des ersten Mechanismus ist, und der Rotorwelle angeordnet ist und die andere Sperrklinke zwischen der entsprechenden Rolle (15''') des zweiten Mechanismus und der Rotorwelle angeordnet ist.

15. Schwebende Einrichtung umfassend eine Vorrichtung (10) nach einem der Ansprüche 1 bis 14.

## Revendications

1. Dispositif (10) de conversion de l'énergie de la houle en énergie électrique, comprenant:
- une masse de glissement (2 ; 12 ; 112) ;
- une guide (1 ; 11 ; 111) pour la masse de glissement ;
- un générateur électrique (6 ; 16) muni d'un rotor ;
- un arbre intégré au rotor ;
- un premier mécanisme qui relie la masse de glissement à l'arbre de rotor et qui peut convertir le mouvement de la masse de glissement sur la guide en un mouvement de rotation de l'arbre du rotor ;
comprenant ledit dispositif en outre un second mécanisme interposé entre le premier mécanisme et l'arbre de rotor pour fournir au rotor un mouvement de rotation à sens unique, indépendamment de la direction du mouvement de la masse de glissement, **caractérisé en ce que** le second mécanisme comprend en outre :
- une première roue dentée (51 ; 151) ayant un premier pignon libre (52 ; 152) en prise avec elle et ayant un premier sens de prise ;
- une seconde roue dentée (51' ; 151') ayant un second pignon libre (52' ; 152') en prise avec elle et ayant un second sens de prise qui est opposé au premier sens de prise, dans lequel la seconde roue dentée est reliée à la première roue dentée de sorte que les deux roues dentées ont des sens de rotation opposés ;
- une troisième roue dentée (53 ; 153) qui est en prise avec les deux pignons libres et qui est reliée à l'arbre de rotor, alors que la roue dentée première ou seconde est reliée au premier mécanisme.

2. Dispositif selon la revendication 1, comprenant un volant d'inertie (18, 18' ; 118) relié à l'arbre de rotor.

3. Dispositif selon la revendication 1 ou 2, comprenant un ressort moteur relié à l'arbre de rotor.

4. Dispositif selon la revendication 2, dans lequel le volant d'inertie (18, 18' ; 118) comprend un ressort moteur.

5. Dispositif selon l'une quelconque des revendications 2 à 4, dans lequel le volant d'inertie (18, 18' ; 118) est situé sur la masse de glissement (2 ; 12 ; 112).

6. Dispositif selon l'une quelconque des revendications précédentes, dans lequel la guide (1 ; 11 ; 111) a une forme circulaire.

7. Dispositif selon la revendication 5 ou 6, dans lequel le rotor est coaxial avec la guide (1;11;111).

8. Dispositif selon l'une quelconque des revendications 2 à 4, dans lequel la guide (1 ; 11 ; 111) est un segment droit et le volant d'inertie (18, 18') est situé sur l'axe de rotor.

9. Dispositif selon la revendication 8, dans lequel la guide (1 ; 11) est montée sur une plateforme pivotante (21).

10. Dispositif selon la revendication 9, comprenant un amortisseur angulaire (23) pour amortir la rotation de la plateforme (21).

11. Dispositif selon la revendication 10, dans lequel l'amortisseur (23) est du type fluido-dynamique ou du type magnétique.

12. Dispositif selon l'une quelconque des revendications précédentes dans lequel le premier mécanisme comprend deux poulies (5, 5' ; 15, 15') et une courroie ou chaîne fermée (4; 14) s'étendant entre lesdites poulies, de manière qu'une des poulies (5' ; 15') est couplée à l'arbre de rotor et la courroie ou la chaîne est fixée à la masse de glissement (2 ; 12), le premier mécanisme comprenant aussi un train d'engrenages (17 ; 117) disposé entre l'arbre de rotor et la poulie couplée à celui-ci afin d'augmenter la vitesse du rotor.

13. Dispositif selon la revendication 12, dans lequel le second mécanisme comprend deux poulies (15", 15'''), chacune d'elles étant intégrale à une poulie respective (15, 15') du premier mécanisme, et une courroie ou chaîne fermée (14') s'étendant entre lesdites poulies, de sorte qu'une de ces poulies (15''') est couplée à l'arbre de rotor et cette courroie ou chaîne est fixé à la masse de glissement (12).

14. Dispositif selon la revendication 13, dans lequel la masse de glissement (12) est reliée au segment supérieur d'une des courroies ou chaînes (14) et au segment inférieur de l'autre courroie ou chaîne (14'), le dispositif comprenant en outre deux rochets inversés (27), un desquels est disposé entre une poulie (15') faisant partie du premier mécanisme et l'arbre de rotor, et l'autre rochet étant disposé entre la poulie correspondante (15''') du second mécanisme et l'arbre de rotor.

15. Appareil flottant comprenant un dispositif (10) selon l'une quelconque des revendications 1 à 14.
